# EUROPEAN PATENT SPECIFICATION

(11) **EP 2 018 960 B1**
(45) Date of publication and mention of the grant of the patent: **30.11.2011**
(21) Application number: 07743587.3
(22) Date of filing: 17.05.2007
(51) Int. Cl.: B32B 15/08, A01N 25/10, A01N 25/34, A01N 59/16, A01P 3/00, A61J 1/05, B32B 9/00, B65D 65/40, B65D 81/24, C08J 7/04

(54) **ANTIBACTERIAL LAMINATE**
ANTIBAKTERIELLES LAMINAT
PRODUIT ANTIBACTÉRIEN MULTICOUCHE

(30) Priority: 17.05.2006 JP 2006138288; 15.12.2006 JP 2006339012
(43) Date of publication of application: 28.01.2009
(73) Proprietor: Ishida Co., Ltd., Kyoto-shi Kyoto 606-8392 (JP); Saichi Industry Co., Ltd., Otsui-shi Shiga 520-2113 (JP)
(72) Inventor: NAKAGAWA, Yukio, Ritto-shi, Shiga 520-3026 (JP); IWASAKI, Yoshio, Ritto-shi, Shiga 520-3026 (JP); TAKENAKA, Kunihiro, Ritto-shi, Shiga 520-3041 (JP); SHANO, Masayoshi, Ritto-shi, Shiga (JP)
(74) Representative: Jones, Helen M.M.
(86) International application number: PCT/JP2007/060152
(87) International publication number: WO 2007/132919

(56) References cited:
- EP-A1- 1 182 142
- EP-A1- 1 342 566
- EP-A1- 1 369 227
- EP-A1- 1 612 039
- WO-A1-98/32597
- WO-A1-2004/091908
- JP-A- 05 028 835
- JP-A- 06 126 886
- JP-A- 2002 361 797
- JP-A- 2005 289 033
- JP-B2- 59 049 359
- US-A- 5 525 421

## Description

### TECHNICAL FIELD

The present invention relates to an antibacterial film, an antibacterial sheet, and the like with laminate structure imparted with an antibacterial property, and in particular, the present invention relates to an antibacterial laminate preferably used as packaging bags or food-packaging films capable of preventing propagation of bacteria and the like and of maintaining quality when packaging snacks such as potato chips and sweets such as biscuits.

### BACKGROUND ART

With the recent increase in the requests for hygiene, products with antibacterial properties and the like have been demanded, and such demands are striking, particularly for table wares and wrapping materials for foods. With such these backgrounds, as packaging materials for foods with antibacterial properties, proposals have been made for the packaging materials using the laminating film that has layers constituted of thermoplastic resins including organic or inorganic antibacterial agents on its surface (Patent Document 1: Japan Unexamined Patent Publication 2005-187062). However, since these packaging materials are used with the surface layer that includes the antibacterial agent inside of the package, that is, these packaging materials are used toward the food side, there is high possibility that the antibacterial agents directly contact with foods and there lies a concern for safety when organic antibacterial agents are used. In addition, when the inorganic antibacterial agents are used, since the antibacterial agents are exposed on the surface, the antibacterial capability is degraded due to the falling-off or oxidization of the antibacterial agents and also, aesthetic feeling is degraded due to the color changes by the excessive ionization of the antibacterial metal component, and thus, they are not suitable for packaging foods.

JP 2005-289033A describes a laminated film comprising a synthetic resin film on which a metal having an antibacterial property is deposited. However, this reference does not disclose the thickness of the film or whether pores are present.

JP 2002-361797A describes a gas barrier film in which a metal deposited polyester film is formed on a base material polyester film which is heat treated after uni-axial stretching. This reference does not disclose that silver should be used to provide an antibacterial property.

JP 5-28835A describes a film shaped copper deposited base material where a bridged resin primer layer, a copper deposited layer, and a rust preventative agent layer mainly containing benzoazole compound are sequentially formed on a synthetic resin film base. The coating layer of the present invention is not disclosed.

JP 6-126886A describes an exterior composite material comprising an adhesive coating film layer, a flexible resin coating film layer, a metal deposited layer and a weather resistant resin coating a film layer. This reference does not describe any antibacterial properties.

JP 59-49359 B2 describes a metal deposited paper wherein a sealing layer followed by foundation layer, a metal deposited layer and a protection layer are provided sequentially on a base paper. No antibacterial properties are described.

EP 1369227A relates to a biodegradable bag for food packaging that is capable of high speed production and discloses a vapour deposited barrier layer which may be formed from aluminium. However, there is no disclosure of a silver antibacterial vapour deposited layer.

EP 1182142A discloses a food packaging bag comprising a laminated film having a vapour deposited layer between a high melting point polyester layer and a low melting point polyester layer. Again, there is no disclosure of an antibacterial vapour deposited layer made from silver.

WO 98/32597 discloses a barrier vapour deposited film comprising a polypropylene layer, a polyethylene layer and a metal layer together with a polymer film. The thickness of the coating layer does not correspond to that of the present invention.

US 5525421 A discloses a composite film comprising a polypropylene, a polyvinyl alcohol and a metal layer. There is no disclosure of a coating layer having the thickness required by the present invention together with pores of an appropriate size.

WO 2004/91908 discloses metallised films having enhanced barrier properties consisting of a first polymer layer, a barrier layer and a metal layer coated with a heat film and/or printable layer which has been transferred onto the metal layer. There is no disclosure of a coating layer according to the present invention.

EP 1342566 discloses a laminate packaging material comprising a paper layer and a polycycloolefin copolymer containing layer which is provided on the outside of the paper layer. A barrier layer is provided on the inside of the paper layer and a further inner polyethylene layer. There is no disclosure of a coated layer according to the present invention.

EP 1612039A1 discloses a method for producing packaging laminated material. This reference describes that a heat seal layer is laminated on the inner surface of a silver vapour deposited layer.

### DISCLOSURE OF THE INVENTION

### PROBLEMS TO BE SOLVED BY THE INVENTION

Therefore, the object of the present invention is to provide the antibacterial laminate used for packaging materials for foods with at least either of the antibacterial property and the antifungal property, and to provide the antibacterial laminate that does not directly contact with the packaged materials or air.

### MEANS FOR SOLVING THE PROBLEMS

In order to solve the above mentioned problems, first, it is necessary that the layer having the antibacterial agents does not directly contact with air. For this, attention has been made not to provide the layer having antibacterial agents on the outermost surface and not to provide portions in which the layer having the antibacterial agents is exposed to the outside air, for example, by penetration pores. On the other hand, in order to ensure the antibacterial property of the laminate, it is necessary that the antibacterial agents in the layer inside of the laminate function on the surface of the laminate. Thus, the inventors have considered that the stable antibacterial function over a long term can be imparted to the laminate by the sustained release effect by designing the laminate so that the antibacterial agents that are liberated from the layer that has the antibacterial agents (hereinafter called "antibacterial layer") are gradually emitted toward the laminate surface. And they have found the laminate capable of showing the effect of antibacterial function derived from the antibacterial layer on the laminate surface even when the antibacterial layer is coated, and have accomplished the present invention.

In the antibacterial laminate with at least either of the antibacterial property and the antifungal property, the antibacterial laminate of the present invention has the most important characteristics as defined in claim 1.

It is preferable that the substrate layer is a stretched polymer film or the laminate of the stretched polymer film and the non-stretched polymer film and that in such a laminate, the antibacterial layer is formed in the side of the non-stretched polymer side.

It is preferable that the coating layer is constituted of the polyester resin, the cellulose derivative resin, or the mixture of any of the above mentioned resins.

It is preferable that the coating layer is formed by coating a polymer solution on the antibacterial layer.

Further, between the substrate layer and the antibacterial layer, it may have a metal deposition layer in which a metal or a metal oxide that has no antibacterial and antifungal property.

It is preferable that the metal or the metal oxide that has no antibacterial or antifungal property is aluminum, silica, or alumina.

It is preferable that the substrate layer is the stretched film constituted of a polyester, a polypropylene, or a polylactic acid.

It is preferable that at least any of the resins is included between the substrate layer and the antibacterial layer, said resin being selected from a group of a polyester resin, an acrylic resin, an urethane resin, an epoxy resin, a melamine resin, a polyamide resin and polyvinyl alcohol resin.

The antibacterial laminate of the present invention is effective for food packages or containers tightly packed or sealed, in particular, such as food packaging films, food packaging bags, packaging bags or containers, sheet-like strips sealed in the food packaging bags or food containers or attached to the wall surfaces. When used as food packaging bags, it is preferable to make long-scaled packaging materials capable of further laminating the sealant layer constituted of polymers with low melting points on certain portions of the coating layers of the antibacterial laminate of the present invention thereby being able to make the certain portions in the vertical direction and the horizontal direction to seal surfaces when the bags are formed.

Further, the antibacterial laminates of the present invention are effective for medical use such as sheet-like strips sealed in medical bags including transfusion bags, urine-collecting bags, peritoneal dialysis bags or the sheet-like strips attached to the wall surfaces, medical charts, consultation tickets, and the like.

### EFFECTS OF THE INVENTION

By the present invention, the antibacterial laminated can be obtained that has stable antibacterial function and antifungal function over a long term without generating color changes and the like due to oxidization even when contacting with outside air.

Also, when the coating layer has a certain degree of oxygen permeability and when the metal of the metal deposition film has an oxygen trapping property by oxidization, the antibacterial laminate of the present invention has gas barrier property as well as antibacterial function and antifungal function, and therefore, it is further excellent when used as packaging materials.

Further, when the antibacterial layer is constituted of vapor deposition silver and is formed with a thickness of 100 to 200 Å, the vapor deposition layer has the antibacterial property and passes through visible light, and therefore, the antibacterial laminate of the present invention can form the packaging bag with the foods therein observed.

The utensils used in the medical scenes such as medical charts and consultation tickets utilizing the antibacterial laminates of the present invention and medical bags and the like such as transfusion bags or urine-collecting bags and the like with the sheet-like strips of antibacterial laminate sealed or attached are effective for preventing hospital infection.

### BRIEF DESCRIPTION OF THE DRAWINGS

Fig.1 is a schematic sectional view showing one example of a structure of the film which is the antibacterial laminate of the present invention.
Fig.2 is a schematic sectional view showing the structure of the food packaging bag using the antibacterial laminate of the present invention.

### EXPLANATION OF LETTERS OR NUMERALS

1 shows a coating layer
2 shows an antibacterial layer
3 shows an adhesive layer
4 shows a substrate layer
5 shows a sealant layer

### BEST MODE FOR CARRYING OUT THE INVENTION

### (Basic structure of laminate)

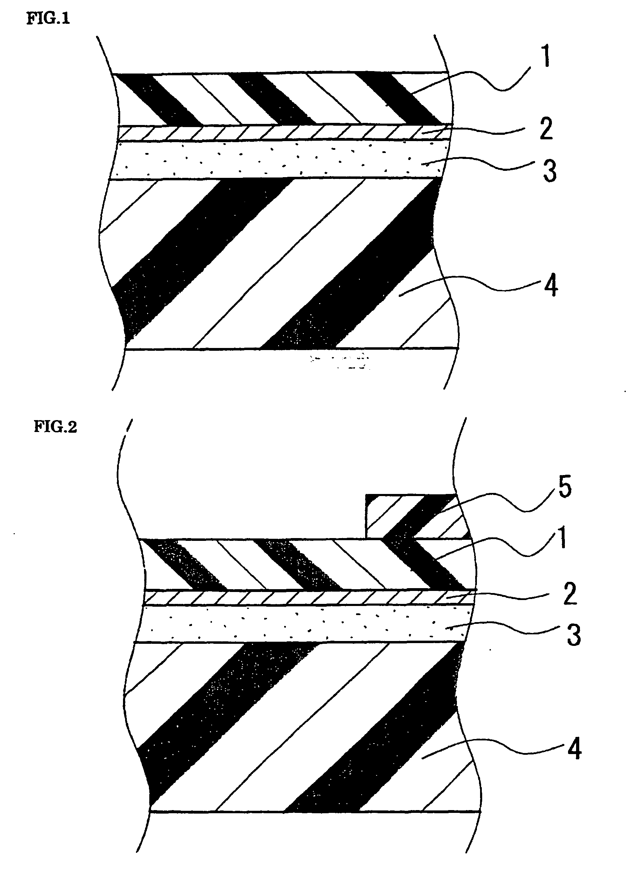

The antibacterial laminate of the present invention is at least provided with a coating layer (1), an antibacterial layer (2), and a substrate layer (4). Further, in order to surely laminate the antibacterial layer (2) on the substrate layer (4), as shown in the schematic sectional view in Fig. 1, it is preferable that the antibacterial laminate of the present invention is formed of the coating layer (1), the antibacterial layer (2), the adhesive layer (3), and the substrate layer (4). Also, it may have a metal deposition layer with a metal or a metal oxide that has neither antibacterial property nor antifungal property deposited between the antibacterial layer (2) and the substrate layer (4) . Further, in addition to the embodiment of a single layer constituted only of a single material, the substrate layer (4) may have the embodiment in which a plurality of materials is laminated.

In addition, although further providing the additional layers on the front surface or the rear surface of the antibacterial laminate is not prohibited, it should be noted that when the additional layers are provided over a whole surface on the coating layer (1), the effect of the present invention cannot be achieved. In other words, for example, when used as the food packaging bag for sealing the foods therein, it is preferable that at least a part of the coating layer (1) is exposed at the laminate's surface that contacts with the food as the outermost layer (viewed as a bag structure, the innermost layer) so that the part of the coating layer (1) can contact with sealed foods.

### (Coating layer)

The coating layer contributes to the sustained release property of the antibacterial agents in the antibacterial laminate and the coating layer is a substantially poreless polymer coated film obtained by the coating of a coating liquid. When further detailed explanation on "substantially poreless" should be required, it means that there is no pore present whose diameter is not less than 0.1µm. When there are pores whose diameter of not less than 0.1µm present in the coating layer (1), there is a concern, for example, that the food sealed in the food packaging bag using the antibacterial laminate of the present invention and the antibacterial layer (2) directly contacts with each other, and by this, there is a concern that the metal constituting the antibacterial layer (2) adheres to the sealed food.

As polymers used as materials of the coating layer, the resins harmless to human bodies even when contacting with food are used. Such resins are polyester resins, cellulose derivative resins, acrylic resins, epoxy resins, urethane resins, phthalic acid resins, amino resins, and the like can be used either alone or in combinations. Further, it is preferable that the polyester resins or cellulose derivative resins are used alone or in combinations.

As polyester resins, copolymers of polybasic acid and polyvalent alcohol are exemplified. As polybasic acid, adipic acid, succinic acid, isophthalic acid, terephthalic acid, phthalic anhydride, maleic anhydride, trimellitic acid, hexahydrophthalic anhydride, and the like are exemplified. As polyvalent alcohol, ethylene glycol, propylene glycol, glycerin, trimethylol propane, neopentyl glycol, 1,6hexanediol, pentaerythritol, sorbitol, and the like are exemplified.

In the present invention, it is preferable to use amorphous polyester soluble to the organic solvent obtained by copolymerizing these polybasic acids and polyvalent alcohol. To be specific, it is preferable to use polyester disclosed in the patent document 2 (Unexamined Patent Publication 2005-162960) (copolymerized polymer of terephthalic acid, isophthalic acid and ethylene glycol, neopentyl glycol, and the like) and polyester marketed under the name of "PYLON" (manufactured by TOYOBO CO., LTD.).

As cellulose derivative resins, nitro cellulose, cellulose acetate butyrate, cellulose acetate, cellulose acetate propionate, and the like can be exemplified, and in particular, nitro cellulose, cellulose acetate butyrate are preferable and nitro cellulose is further preferable.

As acrylic resins, (meth)acrylic resins obtained by copolymerizing derivatives of (meth)acrylic acid (methyl (meth)acrylate, n-propyl (meth)acrylate, 2-hydroxyethyl (meth) acrylate, (meth) acryl amide, and the like) are exemplified and every kind of (meth) acrylic resins used for coating can be used.

As epoxy resins, glycidyl ether type epoxy resin (bisphenol A glycidyl ether and the like), glycidyl ester type epoxy resin, glycidyl amino type epoxy resin, cyclic oxyrane type epoxy resin, and the like can be exemplified.

As urethane resins, the urethane resins obtained by reacting each kind of isocyanate compounds (hexamethylene diisocyanate, cyclohexane diisocyanate, and the like) with each kind of polyols (polyester polyol, polyether polyol, and the like) can be exemplified.

As phthalic acid resins, the resins obtained by condensation of each kind of polybasic acids (phthalic anhydride, adipic acid, and the like) and polyvalent alcohols (glycerin, pentaerythritol, and the like) can be exemplified.

As amino resins, the resins obtained by adding formaldehyde to each kind of amino compounds (melamine, guanamine, urea, and the like) and then modifying the addition products (methylol and the like) with alcohol can be used. To be specific, melamine resins, benzoguanamine resins, acetoguanamine resins, and urea resin used for coatings can be exemplified. Among them, melamine resins and benzoguanamine resins are preferable.

In the present invention, the above mentioned resins can be used in combinations as well.

In the present invention, other than the resins exemplified above, it is possible to use modified products of these resins, for example, acryl modified polyester resins, urethane modified polyester resins, urethane modified alkyd resins, and epoxy modified polyester resins.

It is necessary that a thickness of the coating layer is within the range of 0.1 to 1.0µm and more preferably, it is 0.2 to 0.5µm. When the thickness is less than 0.1µm, a formation of the coated film becomes difficult and there is a concern that the antibacterial agents penetrate the coating layer and are exposed to the laminate surface, and when the thickness exceeds 1.0µm, the antibacterial agents or antibacterial metal ions liberated from the antibacterial layer cannot reach to the laminate surface, thereby prohibiting the satisfactory antibacterial function.

### (Antibacterial layer)

The antibacterial layer (2) is a metal deposition film in which the metals with at least either of the antibacterial property and the antifungal property (hereinafter simply called "antibacterial metal") are deposited by such methods as vacuum deposition methods or ion deposition methods. This is because that ionized.antibacterial metals are liable to move to the surfaces of the laminates and that it is advantageous to obtain the desired antibacterial effect. As antibacterial metals, silver is used. Also, the film thickness of the vapor deposition film of the antibacterial layers is about 100 to 1000Å.

Silver has preferable property for every safety, antibacterial property, and antifungal property. When the silver vapor deposition layer is used, it has both antibacterial property and antifungal property even when it has a thickness of 100Å. In addition, it has also been found that even when the silver deposition thickness is as thin as 100 Å, it shows a satisfactory gas barrier property from the practical view point. In particular, when the silver deposition thickness is 550 Å, the gas barrier property becomes very high. Such a high gas barrier property is considered to be based on the fact that the silver activated by the deposition easily absorbs oxygen thereby becoming silver oxide. On the other hand, when the thickness of the silver deposition is not greater than 200 Å, transparent or translucent films can be prepared as antibacterial laminates, and therefore, the contents can be observed from outside in a tightly packed state and thus, the application range of the antibacterial laminate of the present invention can be enlarged.

Further, the antibacterial layer (2) can also be formed by vapor depositing the metal other than the already mentioned antibacterial metal ormetal oxide with no antibacterial property or antifungal property on the substrate layer (4) or a adhesive layer (3) (not illustrated), further followed by depositing the antibacterial metal thereon. As preferable metals or metal oxides that have neither antibacterial property nor antifungal property, aluminum, silica, or alumina can be exemplified. It is preferable that these vapor deposition layers (3) are formed within the range of 200 to 1500Å.

### (Adhesive layer)

An adhesive layer (3) plays a role as an anchor coating agent since the antibacterial layer (2) is a metal deposition film. As resins used for the adhesive layer (3), polyester resins, acrylic resins, urethane resins, epoxy resins, melamine resins, polyamide resins, polyvinyl alcohol resins, and the like used alone or in combinations can be exemplified. The adhesive layer (3) is formed by coating these resins as adhesive agents on the substrate layer (4). In addition, although these resins can be coated as the adhesives as they are, two-component types can be formed using isocyanate and the like as a curing agent and be coated, and it is particularly preferable to form the adhesive layer (3) by coating adhesive agents of polyester/isocyanate.

### (Substrate layer)

A substrate layer (4) imparts basic strength to the antibacterial laminate. Further, in the antibacterial laminate of the present invention, the antibacterial layer (2) is formed by vacuum deposition methods or ion deposition methods on the substrate layer (4) interposing the adhesive layer (3). Therefore, as materials used for the substrate layer (4), it is preferable to use layers formed of heat resistant polymer or paper. As specific polymer materials, polyethylene terephthalate (PET) films, polypropylene films, PVA films, polyamide films, polylactic acid films, and the like can be used.

As polymer materials used for the substrate layer (4), it is preferable to use strong stretched polymer films. As the stretched films, either of monoaxially stretched films and biaxially stretched films may be used.

Or, it is also preferable to prepare the laminate of the stretched polymer film and the non-stretched polymer film. In this case, it is preferable to form the antibacterial layer (2) in the side of the non-stretched polymer by vapor deposition. To be specific, the substrate layer (4) is prepared by laminating the non-stretched polymer layer on the stretched polymer film and the antibacterial layer (2) is formed by the vapor deposition from the non-stretched polymer layer side and further, by forming the coating layer (1) on the antibacterial layer, thereby preparing the antibacterial laminate of the present invention. It is preferable to constitute the substrate layer of the laminate of the stretched polymer film and the non-stretched polymer film particularly when the antibacterial laminate of the present invention is used as a packaging material for forming the packaging bag. In other words, by making the non-stretched polymer film a sealant film, and then by masking the to-be-sealed portions among the non-stretched polymer film so as to prevent vapor deposition of the antibacterial layer, or by peeling off the deposition layer of the to be sealed portions after the whole deposition, the heat-sealable packaging material in the sealed surface can be prepared. The packaging bags excellent in the antibacterial property or antifungal property can be formed of the packaging materials prepared as above.

As examples of the preferably used non-stretched polymers, polypropylene, polyethylene terephthalate, polylactic acid, and the like can be exemplified.

It is preferable that the thickness of the substrate layer (4) in the present invention is within the range of 10 to 1000µm. It is preferable that the thickness of the substrate layer is selected within the range of 10 to 200µm particularly when the antibacterial laminate of the present invention is used for the food packaging bag for packaging.

### (Use)

Since the antibacterial laminate of the present invention can show the antibacterial property without directly contacting with the antibacterial layer, its safety is high. Also, the antibacterial laminate of the present invention can show the antifungal property and the oxygen barrier property as well. The antibacterial laminate of the present invention with such characteristics can be applicable to various uses. Further, depending on the thickness of the antibacterial laminate layers, the laminate can be made into a transparent or a translucent film, and therefore, it is preferable for the uses for acknowledging the substrate or contents through the antibacterial laminate. As specific applications, the followings can be exemplified.

### [1. Food packaging bag]

The antibacterial laminate can be used as a starting laminated film to prepare a food packaging bag for packaging such as pillow type bags, square bags with gussets or rectangular sealed bags and the like. It is preferable that the laminating film has a thickness of 30 to 100µm as a whole. In addition, in order to secure the antibacterial property in the bag, the inside surface of the bag should be the coating layer and therefore, the sealant layer is laminated only on the portions used for bonding for producing the bag when the sealant layer for producing the bag is provided on the coating layer. In Fig. 2, the schematic sectional view shows the structure when the laminate of the present invention is used as a food packaging bag. As shown in the Fig.2, when the laminate is used as the food packaging bag, the long-scaled packaging materials in which the sealant layer (5) is further laminated in the side of the coating layer (1) of the antibacterial laminate constituted of the coating layer (1), the antibacterial layer (2), the adhesive layer (3), and the substrate layer (4) are provided, however, it is preferable not to laminate the sealant layer (5) over the whole surface of the coating layer (1) but to laminate only on the predetermined sealed portions (vertical direction, horizontal direction).

As methods for making the antibacterial laminate of the present invention into the food packaging bag, for example, the methods comprising preparing the long-scaled packaging materials coated with polymer that is to be a sealant layer at the predetermined sealed portions (vertical direction, horizontal direction) of the antibacterial laminate of the present invention, supplying the above structured long-scaled packaging materials to the packaging machine thereby shaping the film into tubular, while at the same time, supplying the food from the apex and performing vertical sealing and horizontal sealing, thereby forming into the food packaging bag can be exemplified.

As materials used for the sealant layer, polymer with a low melting point, low density polyethylene, copolymer of propylene and other olefin, non-stretched polypropylene, ethylene vinyl acetate resin and the like can be exemplified.

Foods sealed in the food packaging bag enjoy benefit of the antibacterial or antifungal effect of the antibacterial layer via the coating layer. Examples of the sealed foods include snacks such as potato chips, rice crackers (dried rice crackers and wet rice crackers) and sweets such as biscuits, sponge cakes and the like, and the food packaging bags using the antibacterial laminate of the present invention can preserve these sealed foods for a long time. In particular, the food packaging bag using the antibacterial laminate of the present invention can preserve even the foods that contain water such as sponge cakes or wet rice crackers without being contaminated by bacteria or molds.

Further, since the coating layer is present, the antibacterial and the antifungal property is maintained without letting the deposited metal, particularly silver, in the antibacterial layer fall off and even without color changes due to oxygen or small amount of SO₂ contained in the air.

### [2. Sheet-like strip sealed in or bonded to the package for foods]

In general, a drying agent and a deoxidizer are contained in the packaging bag for sealing the foods. However, the packaging bag with a sheet-like strip of the antibacterial laminate of the present invention sealed in or bonded to the inner side can be used as the food-sealed packaging bag without sealing in such a deoxidizer. Likewise, the above mentioned sheet-like antibacterial laminate can be used sealed in or bonded to the inner side of the food containers in which cupped noodles are tightly packed or sealed in.

When the antibacterial laminate of the present invention is used as the sheet-like strip, those formed with the antibacterial layer and the coating layer on paper or stretched films may be laminated to a plastic sheet with thickness as further required.

The antibacterial laminate of the present invention is used by cutting it into an appropriate size in order to seal it in the packaging bag or to bond it to the inner side of the packaging bag. Sealing of the antibacterial laminate of the present invention to the packaging bag is made by forming the packaging bag by the bag making-packaging machine with each strip being added when the food measured by one package by a weighing apparatus provided on the packaging machine is supplied to the packaging machine.

On the other hand, in order to form the packaging bag to which the laminate strip of the present invention is bonded, the food packaging bag can be formed by laminating the strip to the portions on which the inner surface of the bag is formed of the general packaging material film except for the predetermined sealed portions so that the coating layer side contacts with the food and by supplying the laminated packaging material film to the bag making-packaging machine thereby forming the food packaging bag. In addition, generally, in the packaging material film, there.is a substrate layer at the outer side and a sealant layer at the inner side and at the rear side of the substrate layer, a printing layer and a deposition layer are formed and on the deposition layer surface, the sealant layer film is formed laminatedly interposing the adhesive or extrude polyethylene.

### [3. Medical bag, medical chart, consultation ticket]

Since the antibacterial laminates of the present invention themselves used as the substrates or the medical bags such as transfusion bags bonded to some substrate can safely show the antibacterial property, they can prevent hospital infection.

Further, sometimes, not only the medical bags but also those used in the medical field such as medical charts and the like are not fully sterilized. Themedical charts, consultation tickets formed of the antibacterial laminates of the present invention themselves have antibacterial property, which shows great effect in preventing hospital infection.

When the medical bags such as transfusion bags, urine-collecting bags, peritoneal dialysis bags and a like are made of the antibacterial laminate of the present invention, as in the case of food packaging bags, the antibacterial layer with the antibacterial or the antifungal metal deposited on polypropylene or polyester film is formed, the coating layer is formed thereupon to obtain the laminated film, and further, the medical bags are formed using the laminated film. In forming the medical bags, by forming the sealant layer in the sealed portions of the laminated film as in the case of the food packaging bags, and by sealing them with this sealant layer, the medical bags can be produced.

Also, the antibacterial laminate of the present invention may be bonded to the inner side surface of the medical bags as in the case of the sheet-like strips.

The consultation tickets made of the antibacterial laminate of the present invention can be obtained by forming the antibacterial layer on paper or a polymer film sheet, and by further forming the coating layer thereupon. To be specific, the antibacterial layer is formed on the paper or the polymer film with a thickness of 500 to 2000µm by deposition and further, the coating layer is formed. Or, using a thin polymer film as a substrate layer, followed by forming the antibacterial layer by deposition thereupon and further followed by forming the coating layer thereby obtaining a complex, and by laminating the complex in the substrate layer side on the plastic sheet such as hard vinyl chloride resins and the like.

In order to manufacture medical charts made of the antibacterial laminate of the present invention, the antibacterial layer and the coating layer are formed on paper (including artificial paper). In this case, the antibacterial layer may be formed not only on one side but also on both sides.

### [4. Food packaging film]

Also, since the antibacterial laminate of the present invention is film-like, it can be used as a film for packaging foods as it is. In the case of the food packaging film, it is used packaging foods so as to make the coating layer side inner side. The food packaging film can be used by taking out the amount required for use from the tubularly laminated film as in the case of a wrapping film for foods or an aluminum foil for foods.

### [Example]

### (Example 1, Comparative Example 1)

### (Production of the antibacterial laminate)

An adhesive agent (polyester/isocyanate) was coated with a film thickness of 0.3µm on a biaxially stretched PET film whose thickness is 38µm. On the film, a silver ion was deposited by an ion deposition method thereby producing a deposition film with a thickness of 800Å to be the antibacterial layer. Next, a top coating solution (polyester(amorphous)/ nitrocellulose/benzoguanamine (composition ratio: 30:30:40 wt %) ; resin concentration 7.3%) was coated on the antibacterial layer so as to have a thickness of 0.5µm, and after drying, the film-like antibacterial laminate was obtained. When the coating layer of the antibacterial laminate is observed with an electronic microscope, it was acknowledged to have no pores. As a strip of Example 1, the antibacterial laminate was subject to evaluation tests for the antibacterial property as follows.

Also, as comparison, a biaxially stretched PET film with a thickness of 38µm was used (Comparative Example 1).

### (Evaluation test for antibacterial capability)

### [1] Test method

### [Film contact method]

According to JIS Z 2801, on a test piece surface, bacterial liquid adjusted by 1/500 standard bouillon was dripped, followed by contacting with a film, thereafter preserving it under the temperature of 35°C. After that, the viable cell number was measured for the bacterial liquid on the test pieces by the lapsed time (0 hour, 24 hours, 48 hours, and 72 hours) and the evaluation of the antibacterial capability was made. The result is shown in Table 1.

### [2] Used strain

(1) Escherichia coli
(2) Staphylococcus aureus

**[Table 1]**

| Strain used : Escherichia coli | Unit : CFU/sheet | | | | |
|---|---|---|---|---|---|
| | Changes in the number of strain with time | | | | |
| | OHr | 24Hrs | 48Hrs | 72Hrs | Average |
| Control | 1.1×10⁵ | 1.0×10⁷ | 1.1×10⁷ | 1.1×10⁷ | 1.1×10⁷ |
| Comparative Example 1 | 1.1×10⁵ | 9.6×10⁶ | 6.8×10⁶ | 9.3×10⁶ | 8.6×10⁶ |
| Example 1 | 1.1×10⁵ | <10 | <10 | <10 | <10 |
| | | | | | |

| Strain used:Staphylococcus aureus | | Unit : CFU/sheet | | | |
|---|---|---|---|---|---|
| | Changes in the number of strain with time | | | | |
| | OHr | 24Hrs | 48Hrs | 72Hrs | Average |
| Control | 1.1×10⁵ | 10×10⁵ | 8.6×10⁴ | 8.1×10⁴ | 8.9×10⁴ |
| Comparative Example 1 | 1.1×10⁵ | 2.8×10⁴ | 2.0×10⁴ | 1.5×10⁴ | 2.1×10⁴ |
| Example 1 | 1.1×10⁵ | <10 | <10 | <10 | <10 |

| | | | | | |
|---|---|---|---|---|---|
| 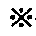 <10 : Not detected | | | | | |

### (Examples 2 to 4, Comparative Example 2)

### (Production of antibacterial laminate film)

The adhesive agent (polyester/isocyanate) with a film thickness of 0.3µm was coated on a biaxially stretched PET film with a thickness of 12µm. On the film, silver was deposited by a vacuum deposition method thereby preparing a deposition filmwhose thickness is varied, as an antibacterial layer. Next, the top coating solution (polyester (amorphous)/nitrocellulose/ benzoguanamine (composition ratio: 30:30:40 wt %); resin concentration 7.3%) was coated on the antibacterial layer so as to have a thickness of 0.2µm, and after drying, the film-like antibacterial laminate was obtained. When each coating layer of the antibacterial laminate is observed with the electronic microscope, it was acknowledged to have no pores for each layer. As strips of Examples 2 to 4, the antibacterial laminates were subject to the test for evaluating the antibacterial property as follows, respectively.

The thickness of the silver deposited film in the Examples of 2 to 4 is as follows.
Example 2: 550 Å
Example 3: 200 Å
Example 4: 100 Å

Also, as comparison, in the above mentioned operation, the laminating film with no silver deposited layer provided was manufactured (Comparative Example 2).

### (Example 5)

As in the Examples 2 to 4, an anchor coating adhesive agent (polyester/isocyanate) with a film thickness of 0.3 µm was coated on the biaxially stretched PET film with a thickness of 12µm. On the film, silver was deposited with a thickness of 100 Å by a vacuum deposition method thereby preparing an antibacterial layer. Next, the same top coating solution as in the Examples 2 to 4, was coated on the antibacterial layer so as to have a thickness of 0.2µm. After drying, the adhesives as mentioned above (polyester/isocyanate) were coated so as to have a film thickness of 0.85pm, thereby obtaining the film-like antibacterial laminate after drying. When the coating layer of the antibacterial laminate is observed with the electronic microscope, it was acknowledged to have no pores. As a strip of Example 5, the antibacterial laminate was subject to evaluation tests for the antibacterial property as follows.

### (Appearance)

When the appearance of each antibacterial laminate of the Examples 2 to 5 was observed visually, it was found that the antibacterial laminate of the Example 2 was opaque silver, the antibacterial laminate of the Example 3 was translucent, and the antibacterial laminates of the Examples 4 and 5 were transparent.

### (Test for antibacterial or antifungal property)

Each of the antibacterial laminates of Examples 2 to 5 was used as a test piece and subject to evaluation tests for the antibacterial or the antifungal property according to following methods.

### [1] Test method

### [Film contact method]

According to JIS Z 2801, the bacterial liquid adjusted by 1/500 standard bouillon was dripped on a test piece surface, and followed by contacting with a film thereby preserving it under the temperature of 35°C. For information, the initiation cell number was 1.0×10⁵ to 1. 9 × 10⁵. After that, the viable cell number was measured for the bacterial liquid on the test pieces by the lapsed time (6 hours and 24 hours) and the evaluation of the antibacterial capability of the film surface was made. The result is shown in Table 2.

### [2] Used strain

(1) Escherichia coli
(2) Staphylococcus aureus
(3) Aspergillus niger

**[Table 2]**

| | E.coli NBRC-397 | | St.aureus NBRC-1273 | | As.niger NBRC-634 | |
|---|---|---|---|---|---|---|
| | In 6 hours | In 24 hours | In 6 hours | In 24 hours | In 6 hours | In 24 hours |
| Example 2 | <10 | <10 | <10 | <10 | 1.1×10³ | 1.3×10² |
| Example 3 | <10 | <10 | <10 | <10 | 3.7×10⁴ | 4.9×10³ |
| Example 4 | <10 | <10 | <10 | <10 | 3.8×10² | <10 |
| Example 5 | 6.5×10⁴ | 3.2×10⁶ | 4.3×10⁴ | 2.0×10³ | 1.4×10⁴ | 1.6×10⁴ |

As shown in Table 2, not only against escherichia coli and staphylococcus aureus, but the antifungal property against aspergillus niger was acknowledged in Example 2 that the number of cell was reduced from initiation cell number of 100,000 to 130 in 24 hours, in Example 3 that the number of bacteria was reduced from initiation cell number of 100,000 to 4,900, and in Example 4 that the number of cell was reduced to not more than 10. Also, as in Example 5, when the adhesion layer is further provided on the whole surface of the coating layer, although the cell number was acknowledged to be reduced compared with the initiation cell number, it cannot be said that the antibacterial property is high in comparison with Examples 1 to 4.

### (Evaluation test for oxygen barrier property)

Regarding oxygen barrier property, measurement was made under the following condition.

Measuring apparatus: Oxtran 2/20MG, manufactured by MOCON Measuring temperature 23°C, dried

The result is shown in Table 3.

**[Table 3]**

| | Oxygen permeability (ml/m² · day · atm) |
|---|---|
| Example 2 | 0.89 |
| Example 3 | 2.59 |
| Example 4 | 4.92 |
| Comparative Example 2 | 145 |

As in Example 3, in Comparative Example 2 with no silver deposition, the numerical value of oxygen permeability exceeding the 100ml/m²· day· atm was acknowledged. On the other hand, in Example 2 with silver deposition of 550 Å, the oxygen barrier property with the oxygen permeability of less than 1 ml/m²· day· atm was acknowledged and it was acknowledged to have the very high level of the oxygen barrier property.

### INDUSTRIAL APPLICABILITY

Since the antibacterial laminate of the present invention has no color changes due to oxidization, sustains the antibacterial property for a long time, and has high safety, it can preferably be used for food packaging bags, food packaging sheets, medical bags such as transfusion bags, urine-collecting bags, medical charts, consultation tickets, and the like.

## Claims

1. An antibacterial laminate having at least either of an antibacterial property and an antifungal property, wherein the antibacterial laminate is constituted at least of a substrate layer that includes a stretched polymer film or a laminate of a stretched polymer film and non-stretched polymer film;
an antibacterial layer with a vapour deposited metal having at least either of the antibacterial property and the antifungal property;
and a coating layer for coating the antibacterial layer;
and wherein the antibacterial layer is formed between the substrate layer and the coating layer, and the coating layer is substantially poreless polymer coated film;
**characterised in that** the thickness of the coating layer is 0.1 to 1.0µm; the coating layer is a polymer coated film with no pore present whose diameter is not less than 0.1µm;
the coating layer is any of a polyester resin, a cellulose derivative, an acrylic resin, an epoxy resin, an urethane resin, a phthalic acid resin, an amino resin or a mixture of any of these resins;
and the vapour deposited metal is silver.

2. The antibacterial laminate as set forth in claim 1, wherein the substrate layer is a stretched polymer film.

3. The antibacterial laminate as set forth in claim 1, wherein the substrate layer is a laminate of a stretched polymer film and a non-stretched polymer film and the substrate layer is prepared by laminating the non-stretched polymer layer on the stretched polymer film and the antibacterial layer is formed by vapour deposition on the non-stretched polymer layer.

4. The antibacterial laminate as set forth in claim 1, wherein the coating layer is constituted of a polyester resin, a cellulose derivative, or a mixture of any of these resins.

5. The antibacterial laminate as set forth in claim 1, wherein the coating layer is formed by coating polymer solution on the antibacterial layer.

6. The antibacterial laminate as set forth in claim 1, having a metal or a metal oxide that has no antibacterial property or antifungal property between the substrate layer and the antibacterial layer.

7. The antibacterial laminate as set forth in claim 6, wherein the metal or the metal oxide that has no antibacterial property or antifungal property is aluminium, silica, or alumina.

8. The antibacterial laminate as set forth in claim 1, wherein the substrate layer is a stretched film constituted of polyester, polypropylene, or polylactic acid.

9. The antibacterial laminate as set forth in claim 1, having an adhesive layer that includes at least any of the resins from the group of polyester resin, acrylic resin, urethane resin, epoxy resin, melamine resin, polyamide resin, and polyvinyl alcohol resin between the substrate layer and the antibacterial layer.

10. A food packaging film constituted of the antibacterial laminate as set forth in claim 1.

11. A long-scaled packaging material constituted of the antibacterial laminate as set forth in claim 1 with a sealant layer made of a polymer with a low melting point formed on predetermined portions of the coating layer in the vertical and in the horizontal direction, that correspond to sealed surface when the bag is formed.

12. A food packaging bag formed by shaping the coated layer of the long-scaled packaging material as set forth in claim 11 with the coating layer as an inner surface and with the substrate layer as an outer surface into tubular, followed by sealing both ends in the vertical direction and by sealing the horizontal direction with predetermined intervals.

13. A tightly packed or sealed packaging bag or a container for foods, wherein a sheet-like strip constituted of the antibacterial laminate as set forth in claim 1 is inserted and the foods are contained.

14. A tightly packed or sealed packaging bag or a container for foods, wherein a substrate layer side of a sheet-like strip constituted of the antibacterial laminate as set forth in claim 1 is bonded to a wall surface of the bag or container and the foods are contained.

15. A medical bag formed of the antibacterial laminate as set forth in claim 1.

16. A medical bag coated of the antibacterial laminate as set forth in claim 1.

17. The medical bag as set forth in claim 15 or 16, wherein the medical bag is a transfusion bag, a urine-collecting bag, or a peritoneal dialysis bag.

18. A medical chart formed of the antibacterial laminate as set forth in claim 1.

19. A consultation ticket formed of the antibacterial laminate as set forth in claim 1.

## Patentansprüche

1. Antibakterielles Laminat, das eine antibakterielle Eigenschaft und/oder eine antimykotische Eigenschaft hat, wobei das antibakterielle Laminat wenigstens aus Folgendem besteht: einer Trägerschicht, die eine gestreckte Polymerfolie oder ein Laminat aus einer gestreckten Polymerfolie und einer nichtgestreckten Polymerfolie beinhaltet,
einer antibakteriellen Schicht mit einem durch Gasphasenabscheidung aufgebrachten Metall, welches die antibakterielle Eigenschaft und/oder die antimykotische Eigenschaft hat,
und einer Überzugsschicht zur Beschichtung der antibakteriellen Schicht,
und wobei die antibakterielle Schicht zwischen der Trägerschicht und der Überzugsschicht ausgebildet ist und die Überzugsschicht im Wesentlichen eine porenfreie polymerbeschichtete Schicht ist,
**dadurch gekennzeichnet, dass** die Dicke der Überzugsschicht 0,1 bis 1,0 µm beträgt,
die Überzugsschicht eine polymerbeschichtete Folie ohne Poren, deren Durchmesser nicht weniger als 0,1 µm beträgt, ist,
die Überzugsschicht ein Polyesterharz, ein Cellulosederivat, ein Acrylharz, ein Epoxidharz, ein Urethanharz, ein Phthalsäureharz, ein Aminoharz oder ein Gemisch aus beliebigen dieser Harze ist
und das durch Gasphasenabscheidung aufgebrachte Metall Silber ist.

2. Antibakterielles Laminat nach Anspruch 1, wobei die Trägerschicht eine gestreckte Polymerfolie ist.

3. Antibakterielles Laminat nach Anspruch 1, wobei die Trägerschicht ein Laminat aus einer gestreckten Polymerfolie und einer nichtgestreckten Polymerfolie ist und die Trägerschicht durch Laminieren der nichtgestreckten Polymerfolie auf die gestreckte Polymerfolie hergestellt ist und die antibakterielle Schicht durch Gasphasenabscheidung auf der nichtgestreckten Polymerfolie hergestellt ist.

4. Antibakterielles Laminat nach Anspruch 1, wobei die Überzugsschicht aus einem Polyesterharz, einem Zellulosederivat oder einem Gemisch aus beliebigen dieser Harze besteht.

5. Antibakterielles Laminat nach Anspruch 1, wobei die Überzugsschicht durch Beschichten der antibakteriellen Schicht mit einer Polymerlösung hergestellt ist.

6. Antibakterielles Laminat nach Anspruch 1, das zwischen der Trägerschicht und der antibakteriellen Schicht ein Metall oder ein Metalloxid hat, das keine antibakterielle Eigenschaft oder antimykotische Eigenschaft hat.

7. Antibakterielles Laminat nach Anspruch 6, wobei das Metall oder das Metalloxid, das keine antibakterielle Eigenschaft oder antimykotische Eigenschaft hat, Aluminium, Siliciumdioxid oder Aluminiumoxid ist.

8. Antibakterielles Laminat nach Anspruch 1, wobei die Trägerschicht eine gestreckte Folie bestehend aus Polyester, Polypropylen oder Polylactid ist.

9. Antibakterielles Laminat nach Anspruch 1, das eine Klebstoffschicht zwischen der Trägerschicht und der antibakteriellen Schicht hat, die wenigstens eines der Harze aus der Gruppe aus Polyesterharz, Acrylharz, Urethanharz, Epoxidharz, Melaminharz, Polyamidharz und Polyvinylalkoholharz beinhaltet.

10. Lebensmittelverpackungsfolie, die aus dem antibakteriellen Laminat nach Anspruch 1 besteht.

11. Lang dimensioniertes Verpackungsmaterial, das aus dem antibakteriellen Laminat nach Anspruch 1 besteht, wobei eine Dichtmittelschicht aus einem Polymer mit einem niedrigen Schmelzpunkt auf vorbestimmten Abschnitten der Überzugsschicht in der vertikalen und in der horizontalen Richtung ausgebildet ist, die der versiegelten Oberfläche entsprechen, wenn der Beutel hergestellt ist.

12. Lebensmittelverpackungsfolie, die durch Formen der beschichteten Schicht des lang dimensionierten Verpackungsmaterials nach Anspruch 11 mit der Überzugsschicht als Innenfläche und der Trägerschicht als Außenfläche in Schlauchform ausgebildet wird, gefolgt von Versiegeln beider Enden in der vertikalen Richtung und durch Versiegeln der horizontalen Richtung mit vorbestimmten Intervallen.

13. Dicht verpackter oder versiegelter Verpackungsbeutel oder Behälter für Lebensmittel, wobei ein bogenförmiger Streifen bestehend aus dem antibakteriellen Laminat nach Anspruch 1 eingesetzt ist und die Lebensmittel eingeschlossen sind.

14. Dicht verpackter oder versiegelter Beutel oder Behälter für Lebensmittel, wobei eine Trägerschichtseite eines bogenförmigen Streifens bestehend aus dem antibakteriellen Laminat nach Anspruch 1 an eine Wandfläche des Beutels oder Behälters angeklebt ist und die Lebensmittel eingeschlossen sind.

15. Medizinischer Beutel, der aus dem antibakteriellen Laminat nach Anspruch 1 hergestellt ist.

16. Medizinischer Beutel, der mit dem antibakteriellen Laminat nach Anspruch 1 beschichtet ist.

17. Medizinischer Beutel nach Anspruch 15 oder 16, wobei der medizinische Beutel ein Transfusionsbeutel, ein Urinauffangbeutel oder eine Peritonealdialyse-Beutel ist.

18. Medizinische Tabelle, die aus dem antibakteriellen Laminat nach Anspruch 1 hergestellt ist.

19. Sprechstundenzettel, der aus dem antibakteriellen Laminat nach Anspruch 1 hergestellt ist.

## Revendications

1. Stratifié antibactérien ayant au moins l'une ou l'autre d'une propriété antibactérienne et d'une propriété antifongique, le stratifié antibactérien étant constitué au moins d'une couche de substrat qui comporte un film polymère étiré ou un stratifié d'un film polymère étiré et d'un film polymère non étiré ;
d'une couche antibactérienne à métal déposé en phase vapeur ayant au moins l'une ou l'autre de la propriété antibactérienne et de la propriété antifongique ;
et d'une couche d'enrobage pour enrober la couche antibactérienne ;
et dans lequel la couche antibactérienne est formée entre la couche de substrat et al couche d'enrobage, et la couche d'enrobage est un film revêtu de polymère sensiblement sans pores ;
**caractérisé en ce que** l'épaisseur de la couche d'enrobage est de 0,1 à 1,0 µm ;
la couche d'enrobage est un film revêtu de polymère ne présentant pas de pores d'un diamètre de plus de 0,1 µm ;
la couche d'enrobage est l'une quelconque d'une résine polyester, d'un dérivé cellulosique, d'une résine acrylique, d'une résine époxy, d'une résine uréthanique, d'une résine d'acide phtalique, d'une résine aminique ou d'un mélange de n'importe lesquelles de ces résines ;
et le métal déposé en phase vapeur est de l'argent.

2. Stratifié antibactérien selon la revendication 1, dans lequel la couche de substrat est un film polymère étiré.

3. Stratifié antibactérien selon la revendication 1, dans lequel la couche de substrat est un stratifié d'un film polymère étiré et d'un film polymère non étiré et la couche de substrat est préparée en stratifiant la couche polymère non étirée sur le film polymère étiré et la couche antibactérienne est formée par dépôt en phase vapeur sur la couche polymère non étirée.

4. Stratifié antibactérien selon la revendication 1, dans lequel la couche d'enrobage est constituée d'une résine polyester, d'un dérivé cellulosique, ou d'un mélange de n'importe lesquelles de ces résines.

5. Stratifié antibactérien selon la revendication 1, dans lequel la couche d'enrobage est formée en revêtant une solution polymère sur la couche antibactérienne.

6. Stratifié antibactérien selon la revendication 1, comportant un métal ou un oxyde métallique n'ayant aucune propriété antibactérienne ou antifongique entre la couche de substrat et la couche antibactérienne.

7. Stratifié antibactérien selon la revendication 6, dans lequel le métal ou l'oxyde métallique sans propriété antibactérienne ou antifongique est de l'aluminium, de la silice ou de l'oxyde d'aluminium.

8. Stratifié antibactérien selon la revendication 1, dans lequel la couche de substrat est un film étiré constitué de polyester, polypropylène ou acide polylactique.

9. Stratifié antibactérien selon la revendication 1, ayant une couche adhésive qui comporte au moins l'une quelconque des résines dans le groupe des résine polyester, résine acrylique, résine uréthanique, résine époxy, résine mélanine, résine polyamide, et résine d'alcool polyvinylique entre la couche de substrat et la couche antibactérienne.

10. Film de conditionnement alimentaire du stratifié antibactérien selon la revendication 1.

11. Matériau de conditionnement longue durée constitué du stratifié antibactérien selon la revendication 1 à couche d'étanchéité composée d'un polymère à faible point de fusion formé sur des parties prédéterminées de la couche d'enrobage dans le sens vertical et le sens horizontal, qui correspondent à la surface scellée quand le sachet est formé.

12. Sachet de conditionnement alimentaire formé en mettant en forme tubulaire la couche enrobée du matériau de conditionnement longue durée selon la revendication 11 avec la couche d'enrobage comme surface interne et avec la couche de substrat comme surface externe, puis en scellant les deux extrémités dans le sens vertical et en scellant dans le sens horizontal à des intervalles prédéterminés.

13. Sachet de conditionnement au contenu tassé ou scellé ou contenant alimentaire, dans lequel une bande du type feuille constituée du stratifié antibactérien selon la revendication 1 est insérée et les aliments sont contenus.

14. Sachet de conditionnement au contenu tassé ou scellé ou contenant alimentaire, dans lequel un côté de couche de substrat d'une bande du type feuille constituée du stratifié antibactérien selon la revendication 1 est collé à une surface de paroi du sachet ou contenant et les aliments sont contenus.

15. Poche médicale formée du stratifié antibactérien selon la revendication 1.

16. Poche médicale revêtue du stratifié antibactérien selon la revendication 1.

17. Poche médicale selon la revendication 15 ou 16, la poche médicale étant une poche de transfusion, une poche de collecte d'urine ou une poche de dialyse péritonéale.

18. Tableau médical formé du stratifié antibactérien selon la revendication 1.

19. Ticket de consultation formé du stratifié antibactérien selon la revendication 1.
